# EUROPEAN PATENT APPLICATION

(11) **EP 4 647 403 A1**
(43) Date of publication of application: **12.11.2025**
(21) Application number: 25165830.8
(22) Date of filing: 25.03.2025
(51) Int. Cl.: C01G 53/502, H01M 4/505, H01M 4/525, H01M 4/02

(54) **NICKEL-COBALT-MANGANESE-BASED POSITIVE ELECTRODE ACTIVE MATERIAL, POSITIVE ELECTRODE PLATE, AND NON-AQUEOUS ELECTROLYTE SECONDARY BATTERY**

(30) Priority: 08.05.2024 JP 2024075713
(71) Applicant: Prime Planet Energy & Solutions, Inc., Chuo-ku, Tokyo 103-0022 (JP)
(72) Inventor: WATANABE, Hiroki, Tokyo, 103-0022 (JP)
(74) Representative: Kuhnen & Wacker Patent- und Rechtsanwaltsbüro PartG mbB

(57) **Abstract**

The present disclosure relates to a nickel-cobalt-manganese-based positive electrode active material comprising a large particle group and a small particle group. An average particle size D50 of the large particle group is greater than an average particle size D50 of the small particle group; the average particle size D50 of the large particle group is from 12 to 20 µm; the large particle group includes polycrystal aggregate particles; each polycrystal aggregate particle includes a secondary particle consisting of a plurality of primary particles aggregated together; each polycrystal aggregate particle has a primary particle size of 2.0 µm or less; a crystallite size of a (003) plane of each polycrystal aggregate particle is from 950 to 1210 Å; a crystallite size of a (104) plane of each polycrystal aggregate particle is from 500 to 750 Å; and a peak intensity ratio I(003)/I(104) of the polycrystal aggregate particles is 2.10 or less.

## Description

### CROSS REFERENCE TO RELATED APPLICATIONS

This nonprovisional application is based on Japanese Patent Application No. 2024-075713 filed on May 8, 2024, with the Japan Patent Office, the entire contents of which are hereby incorporated by reference.

### BACKGROUND OF THE INVENTION

### Field of the Invention

The present disclosure relates to a nickel-cobalt-manganese-based positive electrode active material, and it also relates to a positive electrode plate and a non-aqueous electrolyte secondary battery.

### Description of the Background Art

Japanese Patent Laying-Open No. 2017-162790 discloses a positive electrode active material for a non-aqueous electrolyte secondary battery, in which the nickel atom at the 3b site of a lithium-metal composite oxide is replaced by an additive element to shorten the bond distance between an oxygen atom and a transition metal atom.

### SUMMARY OF THE INVENTION

A lithium-nickel-metal composite oxide has a crystal structure that is unstable in a charged state, so it tends to have low thermal stability. It is conceivable that as charging proceeds, lithium is released from the crystal structure of the lithium-nickel-metal composite oxide and thereby the crystal structure becomes less stable, and as a result, when the temperature is raised, for example, oxygen becomes released from the crystal lattice.

An object of the present disclosure is to provide a lithium-nickel-metal composite oxide with enhanced thermal stability.

The present disclosure provides a nickel-cobalt-manganese-based positive electrode active material, a positive electrode plate, and a non-aqueous electrolyte secondary battery as described below.
[1] A nickel-cobalt-manganese-based positive electrode active material comprising:
   a large particle group; and
   a small particle group, wherein
   an average particle size D50 of the large particle group is greater than an average particle size D50 of the small particle group,
   the average particle size D50 of the large particle group is from 12 to 20 µm,
   the large particle group includes polycrystal aggregate particles,
   each polycrystal aggregate particle includes a secondary particle consisting of a plurality of primary particles aggregated together,
   each polycrystal aggregate particle has a primary particle size of 2.0 µm or less,
   a crystallite size of a (003) plane of each polycrystal aggregate particle is from 950 to 1210 Å,
   a crystallite size of a (104) plane of each polycrystal aggregate particle is from 500 to 750 Å, and
   a peak intensity ratio I(003)/I(104) of the polycrystal aggregate particles is 2.10 or less.
[2] The nickel-cobalt-manganese-based positive electrode active material according to [1], wherein the peak intensity ratio I(003)/I(104) of the polycrystal aggregate particles is 2.05 or more.
[3] The nickel-cobalt-manganese-based positive electrode active material according to [1] or [2], wherein the small particle group includes single particles.
[4] The nickel-cobalt-manganese-based positive electrode active material according to any one of [1] to [3], wherein the average particle size D50 of the small particle group is from 2.0 to 6.0 µm.
[5] The nickel-cobalt-manganese-based positive electrode active material according to any one of [1] to [4], wherein the small particle group includes single particles, and secondary particles each consisting of 2 to 10 primary particles aggregated together, and an average particle size of the single particles or the primary particles is 1.7 µm or more.
[6] The nickel-cobalt-manganese-based positive electrode active material according to any one of [1] to [5], wherein a weight decrement in heat mass spectrometry at 120 to 600°C at a temperature raising rate of 5°C/min is 11.5 mass% or less.
[7] The nickel-cobalt-manganese-based positive electrode active material according to any one of [1] to [6], wherein a weight decrease rate per minute in heat mass spectrometry at 120 to 600°C at a temperature raising rate of 5°C/min is 0.40 mass%/min or less.
[8] A positive electrode plate comprising the nickel-cobalt-manganese-based positive electrode active material according to any one of [1] to [7].
[9] A non-aqueous electrolyte secondary battery comprising the positive electrode plate according to [8].

The foregoing and other objects, features, aspects and advantages of the present invention will become more apparent from the following detailed description of the present invention.

### DESCRIPTION OF THE PREFERRED EMBODIMENTS

In the following, a description will be given of an embodiment of the present disclosure, but the below-described embodiment does not limit the scope of the present disclosure.

### <Nickel-Cobalt-Manganese-Based Positive Electrode Active Material>

A nickel-cobalt-manganese-based positive electrode active material (hereinafter also called a positive electrode active material) is used in a positive electrode active material layer of a positive electrode plate of a non-aqueous electrolyte secondary battery (hereinafter also called "a secondary battery") such as a lithium-ion battery, for example. The positive electrode active material includes a large particle group, and a small particle group that has an average particle size D50 smaller than that of the large particle group. The average particle size D50 of the large particle group is from 12 to 20 µm. The large particle group includes polycrystal aggregate particles. Each polycrystal aggregate particle includes a secondary particle consisting of a plurality of primary particles aggregated together. Each polycrystal aggregate particle has a primary particle size of 2.0 µm or less. A crystallite size of a (003) plane of each polycrystal aggregate particle is from 950 to 1210 Å. A crystallite size of a (104) plane of each polycrystal aggregate particle is from 500 to 750 Å. A peak intensity ratio I(003)/I(104) of the polycrystal aggregate particles is 2.10 or less.

Both the active material constituting the large particle group (hereinafter also called a first active material) and the active material constituting the small particle group (hereinafter also called a second active material) include lithium (Li), nickel (Ni), cobalt (Co), and manganese (Mn). Preferably, each of the first active material and the second active material is a lithium-(transition metal) composite oxide in which the content of Ni relative to the total number of moles of metallic element except Li (hereinafter also called "the Ni content") is from 50 to 70 mol%. The composition of the first active material may be the same as, or may be different from, the composition of the second active material.

The Ni content of the lithium-(transition metal) composite oxide may be from 52 to 68 mol%, or may be from 55 to 65 mol%, or may be from 55 to 60 mol%. The Ni content of the first active material may be higher than the Ni content of the second active material. When the Ni content of the first active material and that of the second active material independently fall within the above-mentioned ranges, a secondary battery with enhanced volumetric energy density can be obtained.

The lithium-(transition metal) composite oxide includes Li, Ni, Co, and Mn. The lithium-(transition metal) composite oxide may be, for example, a compound represented by the following formula (i).

Li₁₋ₐNiₓMe₁₋ₓO₂ (i)

[In the formula (i),
-0.3≤a≤0.2 and 0.5≤x≤0.7, and
Me may include one or more types selected from the group consisting of Co, Mn, Al, B, Zr, Ti, Mg, Fe, Cu, Zn, Sn, Na, K, Ba, Sr, Ca, W, Mo, Nb, and Si.]

In the above formula (i), a may be -0.25≤a≤0.15, or may be -0.20≤a≤0.10. x may be 0.52≤x≤0.68, or may be 0.55≤x≤0.65, or may be 0.55≤x≤0.60. Me may include one or more types selected from the group consisting of Co, Mn, Al, B, Zr, Ti, Mg, Mo, and Nb, and preferably it includes at least one of Co and Mn, and more preferably it includes Co and Mn. The composition of the first active material and the composition of the second active material can be determined by high-frequency inductively coupled plasma (ICP) emission spectroscopy, for example.

As long as the object of the present disclosure is not impaired, the positive electrode active material may include another active material, in addition to the first active material and the second active material. This another active material may be a lithium-(transition metal) composite oxide in which the content of Ni is outside the above-mentioned range, or a compound that is not a lithium-(transition metal) composite oxide. This another active material may be primary particles (single particles), or may be secondary particles.

### (Large Particle Group)

The average particle size D50 of the large particle group is from 12 to 20 µm, and, for example it may be from 13 to 19 µm, or may be from 14 to 18 µm. Herein, the average particle size D50 is the particle size in volume-based particle size distribution at which cumulative frequency of particle sizes accumulated from the small size side reaches 50%. The average particle size D50 of the large particle group may be the average particle size D50 of polycrystal aggregate particles described below. The volume-based particle size distribution can be measured with a particle size distribution analyzer.

The large particle group includes polycrystal aggregate particles. The polycrystal aggregate particles are composed of the first active material. Each polycrystal aggregate particle includes a secondary particle consisting of a plurality of primary particles aggregated together. Each polycrystal aggregate particle may be a secondary particle consisting of a plurality of primary particles aggregated together. Each polycrystal aggregate particle is a secondary particle consisting of 50 or more primary particles aggregated together. In each polycrystal aggregate particle, the number of primary particles aggregated together may be 100 or more, or may be 1000 or more, or may be 10000 or more; and it is usually 5×10⁶ or less, and it may be 5×10⁵ or less.

The average particle size R1 of the primary particles is 2.0 µm or less, and, for example, it may be from 0.5 to 1.7 µm, or may be from 0.7 to 1.5 µm. The average particle size R1 is a value determined in an image of the surfaces of secondary particles examined with a scanning electron microscope (SEM), and it is obtained by performing image analysis of an SEM image of the surfaces of a plurality of secondary particles to determine the longest major-axis diameter of each primary particle and then averaging the resulting values obtained for the plurality of secondary particles.

The crystallite size of the (003) plane of each polycrystal aggregate particle is from 950 to 1210 Å. From the viewpoint of thermal stability and storage capacity retention, it is preferably from 950 to 1200 Å, and more preferably, it may be from 970 to 1170 Å. The crystallite size of the (104) plane of each polycrystal aggregate particle is from 500 to 750 Å, and, for example, it may be from 540 to 700 Å, or may be from 540 to 670 Å. The crystallite size is calculated by substituting the half width (d) of a crystal peak (003 plane) obtained by XRD and the half width (d) of a crystal peak (104 plane) that appears at 2θ=44 to 45°, into the Scherrer equation. The crystallite size can be measured by a method described below in the Examples section. The crystallite size can be regulated by changing, for example, the calcination conditions in a first calcination step and a second calcination step in the production of the polycrystal aggregate particles.

When both the crystallite size of the (003) plane of each polycrystal aggregate particle and the crystallite size of the (104) plane thereof fall within the above-mentioned ranges, the weight decrement (the amount of oxygen release) and the weight decrease rate per minute (the rate of oxygen release) in heat mass spectrometry tend to be low, and thermal stability tends to be enhanced.

The peak intensity ratio I(003)/I(104) of the polycrystal aggregate particles is 2.10 or less, and, for example, it may be 2.05 or more, or may be from 2.05 to 2.10. The peak intensity ratio I(003)/I(104) of the polycrystal aggregate particles is an index of the isotropy of the crystal structure of crystallites in the polycrystal aggregate particle. It is conceivable that the lower the peak intensity ratio I(003)/I(104) is, the more stable the crystal structure of the crystallites of the polycrystal aggregate particle is and the greater the area contributing to thermal stability is. The diffraction peak intensities I(003) and I(104) of the polycrystal aggregate particles are the diffraction peak intensities of the (003) plane and the (104) plane, respectively, of the polycrystal aggregate particles measured by XRD, and they can be measured by a method described below in the Examples section. The peak intensity ratio I(003)/I(104) can be regulated by changing, for example, the calcination conditions in the first calcination step and the second calcination step in the production of the polycrystal aggregate particles.

The content of the large particle group in the positive electrode active material, relative to the total mass of the positive electrode active material regarded as 100 mass%, may be from 20 to 80 mass%, and it is from 30 to 70 mass%, and it may be from 40 to 60 mass%.

In the following, an example of the method of producing the polycrystal aggregate particles (the first active material) will be described. The polycrystal aggregate particles are synthesized by two-step calcination which comprises a first calcination step to calcine a first mixture including a lithium compound and a transition metal compound and a second calcination step to calcine a second mixture including the calcined product obtained by the first calcination step and a transition metal compound. By changing the calcination conditions in the first calcination step and the second calcination step, it is possible to control the peak intensity ratio 1(003)/1(104). The method of producing the first active material may include a step to disintegrate the calcined product obtained by the first calcination step or the second calcination step. As the lithium compound, one or more from lithium hydroxide, lithium carbonate, lithium nitrate, lithium acetate, lithium oxide, lithium chloride, lithium fluoride, and the like may be mentioned. As the transition-metal-containing compound, a composite oxide or a composite hydroxide that contains a transition metal such as Ni, Co, and Mn among the metallic elements represented by Me in the above-mentioned formula (i) may be mentioned. Preferably, the content of Li in the first mixture is from 0.7 to 1.2 mol% relative to the total number of moles of metallic element in the first mixture.

The calcination temperature in the first calcination step is preferably from 500 to 600°C, and the calcination time in the first calcination step is preferably from 2 to 4 hours.

As a metal-containing compound, an oxide or a hydroxide that contains a metallic element represented by Me in the formula (i) may be mentioned, and, preferably, an oxide or a hydroxide that contains a metallic element other than transition metals, such as Al and B, may be mentioned. The metal-containing compound may be an oxide or a hydroxide that contains a metallic element including a transition metal.

The calcination temperature in the second calcination step is preferably from 800 to 900°C, and the calcination time in the second calcination step is preferably from 8 to 12 hours. In the second calcination step, calcination is carried out at a temperature within a range that is above the range in the first calcination step.

### (Small Particle Group)

The average particle size D50 of the small particle group may be from 2.0 to 6.0 µm, for example, or may be from 3.0 to 5.0 µm, for example. The average particle size D50 of the small particle group may be the average particle size D50 of single particles or secondary particles each consisting of 2 to 10 primary particles aggregated together, which are described below.

The small particle group includes single particles, and/or secondary particles each consisting of 2 to 10 primary particles aggregated together. The single particles and the secondary particles each consisting of 2 to 10 primary particles aggregated together are composed of the second active material. The small particle group preferably includes single particles. In the secondary particles included in the small particle group each consisting of primary particles aggregated together, the number of the primary particles aggregated together may be from 2 to 8, or may be from 2 to 5. When the small particle group includes the second active material that is single particles or secondary particles each consisting of a small number of primary particles aggregated together, storage capacity retention of the secondary battery tends to be enhanced. As a result, packing properties of the positive electrode active material in the positive electrode active material layer can be enhanced, and volumetric energy density of a positive electrode obtained by using the positive electrode active material can be enhanced.

The average particle size R2 of the single particles and the primary particles in the small particle group may be, for example, 1.7 µm or more, or may be from 1.7 to 6 µm, or may be from 2 to 5 µm, or may be from 2.5 to 4.5 µm. The average particle size R2 is a value determined in an image of the surfaces of the small particles examined with an SEM, and it is obtained by performing image analysis of an SEM image of the surfaces of the plurality of small particles to determine the longest major-axis diameter of each of the single particles and the primary particles and then averaging the resulting values obtained for the plurality of single particles and primary particles.

The ratio between the average particle size D50 of the large particle group and the average particle size D50 of the small particle group, namely, (the average particle size D50 of the large particle group):(the average particle size D50 of the small particle group)) is preferably from 2:1 to 10:1, and it may be from 3:1 to 8:1, or may be from 3.5:1 to 7:1, or may be from 3.5:1 to 8:1. When this ratio, namely, (the average particle size D50 of the large particle group):(the average particle size D50 of the small particle group)) falls within the above-mentioned range, packing properties of the positive electrode active material in the positive electrode active material layer can be enhanced, and the volumetric energy density of the positive electrode can be enhanced.

The content of the small particle group in the positive electrode active material, relative to the total mass of the positive electrode active material regarded as 100 mass%, may be from 20 to 80 mass%, and it is from 30 to 70 mass%, and it may be from 40 to 60 mass%.

The single particles or the secondary particles each consisting of 2 to 10 primary particles aggregated together (the second active material) can be produced by, for example, the two-step sintering described for the method of producing the first active material. By regulating the sintering conditions and/or the disintegration conditions, it is possible to obtain a second active material that has the above-described properties.

The weight decrement of the positive electrode active material in heat mass spectrometry at temperatures from 120 to 600°C at a temperature raising rate of 5°C/min can be 11.5 mass% or less. Moreover, the weight decrease rate per minute of the positive electrode active material in heat mass spectrometry at temperatures from 120 to 600°C at a temperature raising rate of 5°C/min can be 0.40 mass%/min or less. The heat mass spectrometry is carried out by the method described in the Examples section below.

### <Positive Electrode Plate and Non-Aqueous Electrolyte Secondary Battery>

A non-aqueous electrolyte secondary battery according to the present embodiment (hereinafter also called "the present battery") has a positive electrode plate, and the positive electrode plate has a positive electrode active material layer that includes the above-described positive electrode active material. As a result, packing properties of the positive electrode active material in the active material layer can be enhanced, volumetric energy density of the positive electrode can be enhanced, and output properties of the present battery can be enhanced.

Usually, the present battery includes an electrode assembly that includes the positive electrode, as well as a non-aqueous electrolyte solution. The present battery may have a battery case for accommodating the electrode assembly and the non-aqueous electrolyte solution. The battery case can include an exterior package having an opening, and a sealing plate for sealing the opening. Each of the exterior package and the sealing plate can be formed with a metal such as, for example, Al, Al alloy, iron, or iron alloy, and, for example, it can be formed by using an Al-laminated film. Between the electrode assembly and the exterior package, a resin sheet may be provided as an electrode holder.

The electrode assembly may include the positive electrode plate, a negative electrode plate, and a separator. In the electrode assembly, the active material layer of the positive electrode plate faces a negative electrode active material layer of the negative electrode plate, with the separator interposed therebetween. The electrode assembly may be a stack-type one that is formed by stacking the positive electrode plate, the negative electrode plate, and the separator, or may be a wound-type one that is formed by stacking the positive electrode plate, the negative electrode plate, and the separator and winding the resulting stack.

The positive electrode plate has a positive electrode current collector and a positive electrode active material layer including the above-mentioned positive electrode active material, and the positive electrode active material layer is present on the positive electrode current collector. The positive electrode active material layer is formed on one side or both sides of the positive electrode current collector. The positive electrode current collector is a metal foil sheet that is made by using an Al material such as Al and Al alloy, for example, and the metal foil sheet is not particularly limited as long as it is stable at the electric potential range of the positive electrode plate.

The positive electrode active material layer can be formed by, for example, applying a positive electrode composite material slurry to the positive electrode current collector, drying, and compression. The positive electrode composite material slurry can be prepared by adding a solvent such as N-methyl-2-pyrrolidone (NMP) to the active-material-layer-forming materials such as a positive electrode active material, a binder, and a conductive material, and mixing and kneading the resultant.

In addition to the above-mentioned positive electrode active material, the positive electrode active material layer may include a binder, a conductive material, and the like. The binder may be a known material, such as, for example, a fluororesin such as polyvinylidene difluoride (PVdF) and polytetrafluoroethylene (PTFE) and a cellulose-based resin such as carboxymethylcellulose (CMC). The conductive material may be a carbon material, for example. The carbon material may be one or more selected from the group consisting of fibrous carbon, carbon black, coke, and activated carbon, for example. The fibrous carbon may be carbon nanotubes (CNTs), for example.

The positive electrode active material layer may have a thickness from 10 µm to 200 µm, for example. The positive electrode active material layer may have a high density. The positive electrode active material layer may have a density of 3.5 g/cm³ or more, for example, and it may have a density of 4.0 g/cm³ or less, for example.

Usually, the negative electrode plate has a negative electrode current collector, as well as the negative electrode active material layer formed on one side or both sides of the negative electrode current collector. The negative electrode current collector is a metal foil sheet that is made by using a copper material such as copper and copper alloy, for example. The negative electrode active material layer includes a negative electrode active material, and it may further include a conductive material, a binder, and the like.

The negative electrode active material may be a known material, and examples thereof include carbon-based active material particles such as graphite, metal-based active material particles that include an element selected from the group consisting of Si, Sn, Sb, Bi, Ti, and Ge, and the like. Examples of the conductive material include those mentioned above. Examples of the binder include cellulose-based resins such as CMC, methylcellulose (MC), and hydroxypropylcellulose; polyacrylic acid; styrene-butadiene rubber (SBR); and the like. CMC may also be used as a thickener.

The separator has a monolayered or multilayered base material, and on at least one side of the base material, it may have a functional layer. The base material may be a porous sheet such as a film and/or a nonwoven fabric, which is made of a resin such as polyolefin (such as polyethylene and polypropylene), polyester, cellulose, polyamide, and/or the like. The functional layer may be an adhesive layer and/or a heat-resistant layer, for example. The adhesive layer can be formed with an adhesive agent, for example. The heat-resistant layer can include a filler and a binder, for example.

The non-aqueous electrolyte solution is preferably obtained by adding an electrolyte to a non-aqueous solvent such as an organic solvent. Examples of the electrolyte include one or more from LiPF₆, LiBF₄, LiClO₄, LiFSO₃, LiBOB, and the like. Examples of the non-aqueous solvent include one or more from ethylene carbonate (EC), ethyl methyl carbonate (EMC), dimethyl carbonate (DMC), propylene carbonate (PC), butylene carbonate (BC), diethyl carbonate (DEC), and the like. The non-aqueous electrolyte solution may further include an additive such as vinylene carbonate (VC), vinylethylene carbonate (VEC), and/or fluoroethylene carbonate.

### [Examples]

In the following, the present disclosure will be described in further detail by way of Examples.

### [Preparation of Positive Electrode Plate for Evaluation of Storage Capacity Retention]

A positive electrode active material prepared in Examples and Comparative Examples and active material particles (lithium-nickel composite oxide having a particle size from 2 to 6 µm) were mixed together in a mass ratio of 1:1, to obtain a mixture. The resulting mixture in an amount of 97.5 parts by mass was mixed with 1.5 parts by mass of carbon black as a conductive material and 1.0 part by mass of polyvinylidene difluoride (PVdF) as a binder, and to the resultant, a proper amount of N-methyl-2-pyrrolidone (NMP) was further added, and thus a positive electrode composite material slurry was prepared. The resulting positive electrode composite material slurry was applied to a current collector made of an aluminum foil sheet, and thus a positive electrode active material layer was formed. Subsequently, the resultant was dried, rolled with a roller into a certain thickness so that the density of the positive electrode active material layer became 3.55 g/cm³, cut into a certain size, and attached with an aluminum tab, to obtain a positive electrode plate to use for evaluation of storage capacity retention.

### [Preparation of Positive Electrode Plate for TG Measurement]

The positive electrode active material prepared in Examples and Comparative Examples in an amount of 89.0 parts by mass was mixed with 1.0 part by mass of carbon black as a conductive material and 10 parts by mass of polyvinylidene difluoride (PVdF) as a binder, and to the resultant, a proper amount of N-methyl-2-pyrrolidone (NMP) was further added, and thus a positive electrode composite material slurry was prepared. The resulting positive electrode composite material slurry was applied to a current collector made of an aluminum foil sheet, and thus a positive electrode active material layer was formed. Subsequently, the resultant was dried, rolled with a roller into a certain thickness so that the density of the positive electrode active material layer became 3.55 g/cm³, cut into a certain size, and attached with an aluminum tab, to obtain a positive electrode plate for TG measurement.

### [Preparation of Negative Electrode Plate]

A negative electrode active material, carboxymethylcellulose (CMC) as a thickener, and styrene-butadiene rubber (SBR) as a binder, in a mass ratio of 98:1:1, were dispersed in water to prepare a negative electrode composite material slurry. The resulting negative electrode composite material slurry was applied to a current collector made of a copper foil sheet, and thus a negative electrode active material layer was formed. Subsequently, the resultant was dried, rolled with a roller into a certain thickness, cut into a certain size, and attached with a nickel tab, to obtain a negative electrode.

### [Preparation of Non-Aqueous Electrolyte]

Ethylene carbonate (EC), dimethyl carbonate (DMC), and ethyl methyl carbonate (EMC) were mixed together in a volume ratio of 30:30:40. To the resulting mixed solvent, lithium hexafluorophosphate (LiPF6) was added in a concentration of 1.15 mol/liter. Thereto, vinylene carbonate (VC) was further added in an amount of 1.0 mass% relative to the total mass of the mixed solvent, to prepare a non-aqueous electrolyte.

### [Method for Measuring Crystallite Size]

A powder sample of the positive electrode active material was filled into a specifically-designed holder of a fully-automatic multipurpose X-ray diffractometer (SmartLab manufactured by Rigaku), and measurement was performed by a reflection method, to obtain an X-ray diffraction pattern. Cu was used in the vacuum tube (target element) with a tube voltage of 45 kV and a tube current of 200 mA. From the measurement results, the crystallite sizes were calculated based on the half width (d) of a crystal peak (003 plane) that appeared at 2θ=18 to 19° and the half width (d) of a crystal peak (104 plane) that appeared at 2θ=44 to 45°, respectively.

### [Method for Measuring Peak Intensity Ratio I(003)/I(104)]

A powder sample of the positive electrode active material was filled into a specifically-designed holder of a fully-automatic multipurpose X-ray diffractometer (SmartLab manufactured by Rigaku), and measurement was performed by a reflection method, to obtain an X-ray diffraction pattern. Cu was used in the vacuum tube (target element) with a tube voltage of 45 kV and a tube current of 200 mA. From the measurement results, the peak intensity ratio 1(003)/1(104) was calculated based on the peak intensity (cps) of a crystal peak (003 plane) that appeared at 20=18 to 19° and the peak intensity (cps) of a crystal peak (104 plane) that appeared at 2θ=44 to 45°.

### [Method for Measuring Average Particle Size D50]

Measurement was performed with a particle size distribution analyzer (Mastersizer-3000 manufactured by Malvern Panalytical). The calculated D50 value was regarded as the average particle size D50.

### [Method for Evaluating Storage Capacity Retention]

### (Preparation of Test Cell)

The positive electrode plate and the negative electrode plate prepared in the above manner were stacked together with a separator made of polyolefin interposed therebetween, to prepare a stack-type electrode assembly. This stack-type electrode assembly was placed inside an exterior package made of an aluminum laminated sheet, and then the above-mentioned non-aqueous electrolyte was injected into it, followed by sealing the opening of the exterior package, to obtain a test cell.

### (Storage Test)

Under conditions at a temperature of 25°C, constant-current charging of the test cell was performed at a current density of 1.31 mA/cm² until 4.25 V was reached, followed by constant-voltage charging until a current density of 0.2 mA/cm² was reached, followed by 30 minutes of resting, followed by constant-current discharging at a current density of 1.31 mA/cm² until 3.0 V was reached, followed by 30 minutes of resting, followed by constant-current discharging at a current density of 0.2 mA/cm², followed by determination of discharged capacity.

Under conditions at a temperature of 25°C, constant-current charging of the test cell was performed at a current density of 1.31 mA/cm² until 4.25 V was reached, followed by constant-voltage charging until a current density of 0.2 mA/cm² was reached, followed by 30 days of storage in a thermostatic chamber at 60°C.

After 30 days of storage, the cell was left to cool for 1 hour under conditions at a temperature of 25°C. Subsequently, under conditions at a temperature of 25°C, constant-current discharging was performed at a current density of 1.31 mA/cm² until 3.0 V was reached, followed by 30 minutes of resting, followed by constant-current discharging at a current density of 0.2 mA/cm². Subsequently, under conditions at a temperature of 25°C, constant-current charging was performed at a current density of 1.31 mA/cm² until 4.25 V was reached, followed by constant-voltage charging until a current density of 0.2 mA/cm² was reached, followed by 30 minutes of resting, followed by constant-current discharging at a current density of 1.31 mA/cm² until 3.0 V was reached, followed by 30 minutes of resting, followed by constant-current discharging at a current density of 0.2 mA/cm², followed by determination of discharged capacity.

### (Evaluation of Storage Capacity Retention)

The sum of the discharged capacity at a current density of 1.31 mA/cm² and the discharged capacity at a current density of 0.2 mA/cm², both before placement in a thermostatic chamber at 60°C in the storage test, was defined as a pre-storage discharged capacity, and the sum of the discharged capacity at a current density of 1.31 mA/cm² and the discharged capacity at a current density of 0.2 mA/cm², both in the second cycle after the 30-day storage, was defined as a post-30-day-storage-test discharged capacity; and the storage capacity retention was calculated by the following equation. Storage capacity retention (%)=[(Post-30-day-storage discharged capacity)/(Pre-storage discharged capacity)]×100

A storage capacity retention of 97.5% or more is regarded as good.

### [Method of Evaluation in TG Measurement (Weight Decrement and Weight Decrement Per Minute)]

### (Preparation of Test Cell)

The positive electrode obtained in "Preparation of Positive Electrode Plate for TG Measurement" and metal lithium were wound together with a separator made of polyolefin interposed therebetween, and thus a wound electrode assembly was prepared. This electrode assembly was placed inside an exterior package made of an aluminum laminated sheet, and then the above-mentioned non-aqueous electrolyte was injected into it, followed by sealing the opening of the exterior package, to obtain a test cell.

### (Method for Preparing Sample for TG Measurement)

Under conditions at a temperature of 25°C, constant-current charging of the cell was performed at a current density of 0.2 mA/cm² until 4.35 V was reached, followed by constant-voltage charging at 4.35 V until a current density of 0.04 mA/cm² was reached, followed by constant-current discharging at a current density of 0.04 mA/cm² until 2.5 V was reached. One cycle of the above charge/discharge procedure was performed, and then constant-current charging was performed at a current density of 0.2 mA/cm² until 4.40 V was reached, followed by constant-voltage charging at 4.40 V until a current density of 0.04 mA/cm² was reached. The cell was disassembled inside a glove box and the positive electrode plate was taken out, which was rinsed with DMC and vacuum dried. The positive electrode composite material layer of the positive electrode plate was peeled off from the core, to be used as a sample for TG measurement.

### (TG Measurement)

The sample in an amount of 20 mg was placed on a TG pan of a measurement apparatus (DTG-60AH manufactured by SHIMADZU), and then set into the apparatus. In an Ar atmosphere, measurement was performed at a temperature raising rate of 5°C/min, until the temperature reached 600 degrees. The weight decrement and the weight decrease rate per minute at temperatures from 120°C to 600°C were calculated. When the weight decrement at temperatures from 120°C to 600°C was 11.5% or less and the weight decrease rate per minute at temperatures from 120°C to 600°C was 0.40%/min or less, it was considered that the thermal stability was good.

### <Example 1>

During the synthesis of the first active material, LiOH and a transition metal compound represented by Ni_{0.55}Co_{0.20}Mn_{0.25}(OH)₂ were mixed. The first calcination step and the second calcination step were carried out to obtain the first active material. The average particle size D50 of the first active material was 16.0 µm, and the peak intensity ratio I(003)/I(104) was 2.17. In an SEM image, it was identified that the first active material was polycrystal aggregate particles. The particle size of the primary particles constituting the polycrystal aggregate particles was 1.5 µm.

During the synthesis of the second active material, LiOH and a transition metal compound represented by Ni_{0.60}Co_{0.20}Mn_{0.20}(OH)₂ were mixed. The first calcination step and the second calcination step were carried out to obtain the second active material. The average particle size D50 of the second active material was 4.0 µm. It was identified by SEM examination that the second active material was single particles and secondary particles each consisting of about 2 to 10 primary particles aggregated together.

The first active material and the second active material thus obtained were mixed together in a mass ratio of 1:1 to obtain a positive electrode active material. Results are given in Table 1.

### <Examples 2 to 4 and Comparative Examples 1 to 4>

A positive electrode active material was prepared in the same manner as in Example 1 except that during the synthesis of the first active material, parameters in the first calcination step and the second calcination step were changed to achieve the peak intensity ratio I(003)/I(104), the crystallite size of the (003) plane, and the crystallite size of the (104) plane specified in Table 1. Results are given in Table 1.

**[Table 1]**

| | 003 Plane (Å) | 104 Plane (Å) | Peak intensity ratio I(003)/I(104) | Weight decrement (%) | Weight decrement per minute (%/min) | Storage capacity retention (%) | Thermal stability | Storage capacity retention |
|---|---|---|---|---|---|---|---|---|
| Comp. Ex. 1 | 831 | 431 | 2.17 | 12.5 | 0.47 | 98.6 | Poor | Good |
| Comp. Ex. 2 | 859 | 470 | 2.15 | 12.3 | 0.47 | 98.1 | Poor | Good |
| Comp. Ex. 3 | 830 | 447 | 2.15 | 12.1 | 0.48 | 98.4 | Poor | Good |
| Comp. Ex. 4 | 873 | 488 | 2.12 | 11.7 | 0.46 | 98.1 | Poor | Good |
| Ex. 1 | 1033 | 590 | 2.10 | 11.4 | 0.33 | 98.3 | Good | Good |
| Ex. 2 | 976 | 541 | 2.06 | 11.5 | 0.38 | 97.8 | Good | Good |
| Ex. 3 | 1168 | 662 | 2.05 | 11.4 | 0.33 | 97.6 | Good | Good |
| Ex. 4 | 1208 | 713 | 2.04 | 11.4 | 0.35 | 96.6 | Good | Poor |

In Table 1, the thermal stability and the storage capacity retention were rated "Good" when the evaluation result was good, and rated "Poor" when the evaluation result was poor. As seen in Table 1, in Examples 1 to 4 in which the crystallite size of the (003) plane and the (004) plane of the polycrystal aggregate particles of the first active material was controlled, thermal stability was good. In Examples 1 to 3 in which the peak intensity ratio I(003)/I(104) of the polycrystal aggregate particles of the first active material was controlled, storage capacity retention was good. In contrast, in Comparative Examples 1 to 4, thermal stability was insufficient.

Although the embodiments of the present invention have been described, the embodiments disclosed herein are illustrative and non-restrictive in any respect. The scope of the present invention is defined by the terms of the claims, and is intended to encompass any modifications within the meaning and the scope equivalent to the terms of the claims.

## Claims

1. A nickel-cobalt-manganese-based positive electrode active material comprising:
a large particle group; and
a small particle group, wherein
an average particle size D50 of the large particle group is greater than an average particle size D50 of the small particle group,
the average particle size D50 of the large particle group is from 12 to 20 µm,
the large particle group includes polycrystal aggregate particles,
each polycrystal aggregate particle includes a secondary particle consisting of a plurality of primary particles aggregated together,
each polycrystal aggregate particle has a primary particle size of 2.0 µm or less,
a crystallite size of a (003) plane of each polycrystal aggregate particle is from 950 to 1210 Å,
a crystallite size of a (104) plane of each polycrystal aggregate particle is from 500 to 750 Å, and
a peak intensity ratio I(003)/I(104) of the polycrystal aggregate particles is 2.10 or less.

2. The nickel-cobalt-manganese-based positive electrode active material according to claim 1, wherein the peak intensity ratio I(003)/I(104) of the polycrystal aggregate particles is 2.05 or more.

3. The nickel-cobalt-manganese-based positive electrode active material according to claim 1 or 2, wherein the small particle group includes single particles.

4. The nickel-cobalt-manganese-based positive electrode active material according to any one of claims 1 to 3, wherein the average particle size D50 of the small particle group is from 2.0 to 6.0 µm.

5. The nickel-cobalt-manganese-based positive electrode active material according to any one of claims 1 to 4, wherein the small particle group includes single particles, and secondary particles each consisting of 2 to 10 primary particles aggregated together, and an average particle size of the single particles or the primary particles is 1.7 µm or more.

6. The nickel-cobalt-manganese-based positive electrode active material according to any one of claims 1 to 5, wherein a weight decrement in heat mass spectrometry at 120 to 600°C at a temperature raising rate of 5°C/min is 11.5 mass% or less.

7. The nickel-cobalt-manganese-based positive electrode active material according to any one of claims 1 to 6, wherein a weight decrease rate per minute in heat mass spectrometry at 120 to 600°C at a temperature raising rate of 5°C/min is 0.40 mass%/min or less.

8. A positive electrode plate comprising the nickel-cobalt-manganese-based positive electrode active material according to any one of claims 1 to 7.

9. A non-aqueous electrolyte secondary battery comprising the positive electrode plate according to claim 8.
